# EUROPEAN PATENT SPECIFICATION

(11) **EP 4 632 237 B1**
(45) Date of publication and mention of the grant of the patent: **09.09.2026**
(21) Application number: 24382369.7
(22) Date of filing: 09.04.2024
(51) Int. Cl.: F16B 2/06, F16B 2/12, F16B 7/04, F16L 23/00, F16L 23/036, F16L 23/20

(54) **REMOTE CLAMPING SYSTEM FOR FLANGES**
FERNSPANNSYSTEM FÜR FLANSCHE
SYSTÈME DE SERRAGE À DISTANCE POUR BRIDES

(43) Date of publication of application: 15.10.2025
(73) Proprietor: Fundación Tekniker, 20600 Eibar (Guipuzkoa) (ES)
(72) Inventor: ARIZAGA GURRUCHAGA, Iñigo, 20600 Eibar (Guipuzkoa) (ES); ARIZAGA GURRUCHAGA, Asier, 20600 Eibar (Guipuzkoa) (ES); DELGADO CASTRILLO, Andoni, 20600 Eibar (Guipuzkoa) (ES); VEZ LABRADOR, Sergio, 20600 Eibar (Guipuzkoa) (ES)
(74) Representative: Balder IP Law, S.L.

(56) References cited:
- US-A- 4 198 076
- US-A- 5 752 724
- US-A1- 2021 301 956

## Description

### TECHNICAL FIELD

The present invention relates in general to flanges assemblies suitable to be installed in extremely aggressive environments, such as environments with radioactivity or extreme temperatures, or for Ultra-High Vacuum (UHV) applications.

An object of the invention is the provision of a clamping system for flanges which can be activated remotely, and which is efficient and simple to use.

### STATE OF THE ART

CF (ConFlat) flanges are used in a variety of applications requiring extremely high vacuums, such as in scientific research, semiconductor manufacturing, particle physics and high-tech device production. Examples of equipment and systems employing CF flanges include vacuum chambers, mass spectrometers, particle accelerators and physical vapour spray chambers.

It should be noted that there are some environments where accessibility is non-existent or extremely limited, and where environmental conditions can be very aggressive, such as radioactive or high-temperature environments. In such cases, working with Ultra-High Vacuum (UHV) systems and CF flanges presents additional challenges.

In environments where accessibility is limited and environmental conditions are aggressive, working with UHV systems and CF flanges requires additional precautions, including remote handling, careful selection of resistant materials and robust sealing techniques to ensure the safety and functionality of the system under extreme conditions.

In summary, working with CF flanges and ultra-high vacuum systems requires meticulous attention to detail, care in handling and preparation of components, as well as a thorough understanding of vacuum principles and hermetic sealing techniques.

Additionally, existing technical specifications detail that the sealing process between two CF flanges must be carried out efficiently and safely, with a maximum sealing time of no more than one minute. It also emphasizes the importance of the handling and operation of the system being intuitive and easy to understand, in order to ensure smooth and trouble-free operation. These technical specifications try to ensure optimum performance of the equipment, minimizing the time required to carry out sealing tasks and maintaining ease of use as a priority in its design and operation. Furthermore, it is specified that the system must be compatible with manual, hand on, hand off and remote handling modes, which broadens its versatility and adaptability to different operating contexts.

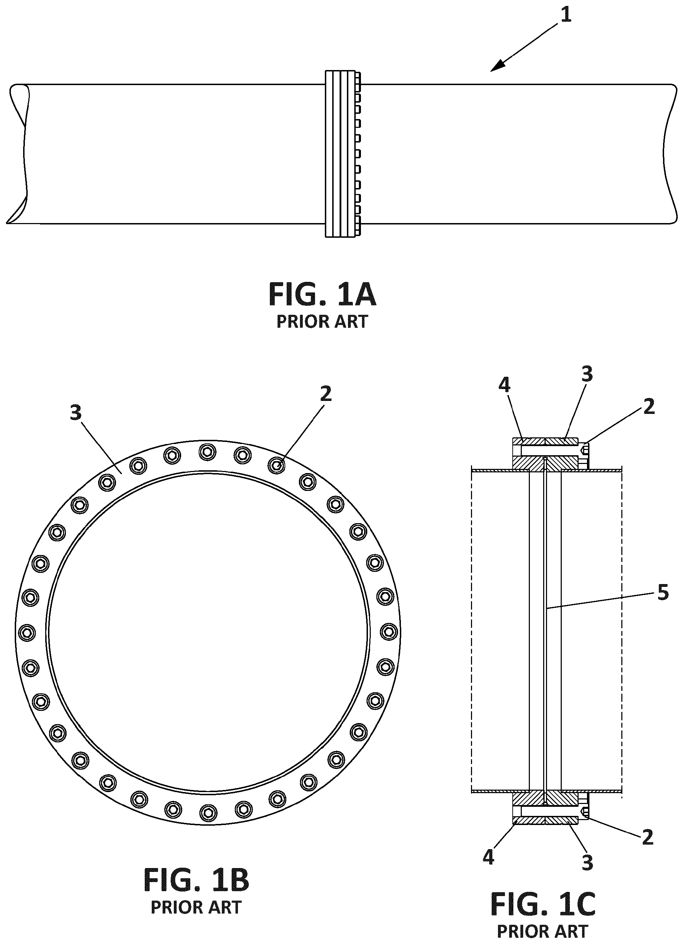

**Figures 1A to 1C** show a conventional CF flanges assembly (1), wherein multiple bolts (2) are required to compress the two CF flanges (3, 4) together, with a sealing gasket (5) sandwiched between them, usually made of copper, aluminum or other suitable material. These flanges often operate in extremely aggressive environments, such as environments with radioactivity or extreme temperatures. It is therefore crucial to have a clamping system that is easy to use and efficient.

These systems fall into three categories: "hand on", "hand off" and "remote handling". Hand-on systems allow direct contact with the device for a limited time. On the other hand, "hand off" systems imply that the operator can manipulate the device using poles or other tools of considerable length.

In contrast, "remote handling" refers to situations where it is not possible for an operator to approach the device, and instead a robot is used to carry out the necessary operations.

The U.S. patent publication US-5.752.724 A refers to a coupling device for ducts comprising locking elements movably mounted in a circumferential succession on an end flange of a first duct having a longitudinal axis, moving member for moving said locking elements from a first position to a second position where said locking elements are engaged with an end flange of a second duct to keep it against the end flange of the first duct, elastically stressed floating ring seal members housed in a sliding and oscillating manner in a respective seat provided in the end flange of the first duct.

### DESCRIPTION OF THE INVENTION

The invention is defined in the attached independent claim, and satisfactorily solves the above-described drawbacks of the prior art, by the provision of a clamping system for flanges, wherein the system comprises: a main body having an annular configuration and adapted to be coupled around a first flange, and a ring-shaped crown mounted on the main body, such that the crown can rotate about the main body.

The clamping system further comprises means for rotating the crown, preferably these means are realized as toothed surface formed on the outer surface of the crown, and an endless screw meshed with the outer toothed surface, so that the crown is rotatable by rotating the endless screw. The endless screw allows the clamping system to be activated from a large distance, for example by using a long tool.

The clamping system further comprises a plurality of clamps installed in the main body and circumferentially distributed around the main body. Each clamp is rotatable about an axis parallel to the axis of the crown, and each clamp has a protrusion at one of its ends which extends radially with respect to the axis of the clamp.

The crown is mechanically engaged with the clamps, such that the clamps can rotate upon rotation of the crown. Furthermore, the clamps are rotatable between a release position in which a second flange can be placed in between the clamps, and a clamping position in which the protrusions project inwardly with respect to the main body. In this way, the clamps can press on a second flange when this second flange is placed in between the clamps, and in a direction parallel to the axis of the crown, in order to be able to clamp two flanges together.

The crown has an internal threaded surface, and the system further comprises a ring meshed with the threaded surface. The main body and the ring are configured such that the rotation of the ring is impeded, but the ring is axially displaceable upon rotation of the crown. The ring is engaged with all the clamps, so that the clamps are axially displaceable together with the ring in both axial directions.

Each clamp has a groove and the clamping system has a pin for each clamp so that each pin is fixed to the main body and it is inserted in a groove of a clamp. Each groove has a straight section extending axially and an inclined section with respect to the straight section, so that each clamp is forced to rotate when the clamps moves axially and the pin runs along the inclined section of the groove.

In a preferred embodiment of the invention, the axial position of each clamp, when they are in the clamping position, is adjustable. For implementing this function, each clamp has a screw threaded in an end of the clamp opposite the end having the protrusions, and a coiled spring is interposed in between the clamp and the head of the screw, and a part of the ring is also interposed in between the coiled spring and the clamp.

The invention also refers to a flanges assembly, comprising:
a first flange permanently joined to an end of a first pipe,
a second flange permanently joined to an end of a second pipe,
a clamping system as the one previously defined, wherein the main body is coupled around the first flange, and wherein the second flange is placed in between the clamps and it is pressed against the first flange by means of the clamps when they are in their clamping position.

In a preferred embodiment, the first flange is formed by a first part and a second part coaxially mounted on the end of the first pipe and attached together by means of screws.

Preferably, the flanges assembly is suitable for Ultra High Vacuum (UHV) applications.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1.- shows a flange assembly according to the prior art. Figure 1A is a side view, Figure 1B is a front view, and Figure 1C is a cross-sectional view.
Figure 2.- shows in Figure 2A a perspective view of a flange assembly according to the invention in an unassembled state. Figure 2B is a cross-sectional view of the assembly of Figure 2A.
Figure 3.- shows in Figure 3A a perspective view of a flange assembly according to the invention in an unassembled state. Figure 3B is a cross-sectional view of the assembly of Figure 3A.
Figure 4.- shows a perspective view of a clamp in a clamping state.
Figure 5.- shows a cross-sectional view of the assembly of the invention, in Figure 5A in a release position, and in Figure 5B is a clamping position. Only an upper part of the assembly is represented, as the lower part is a mirror image of the upper part.

### PREFERRED EMBODIMENTS OF THE INVENTION

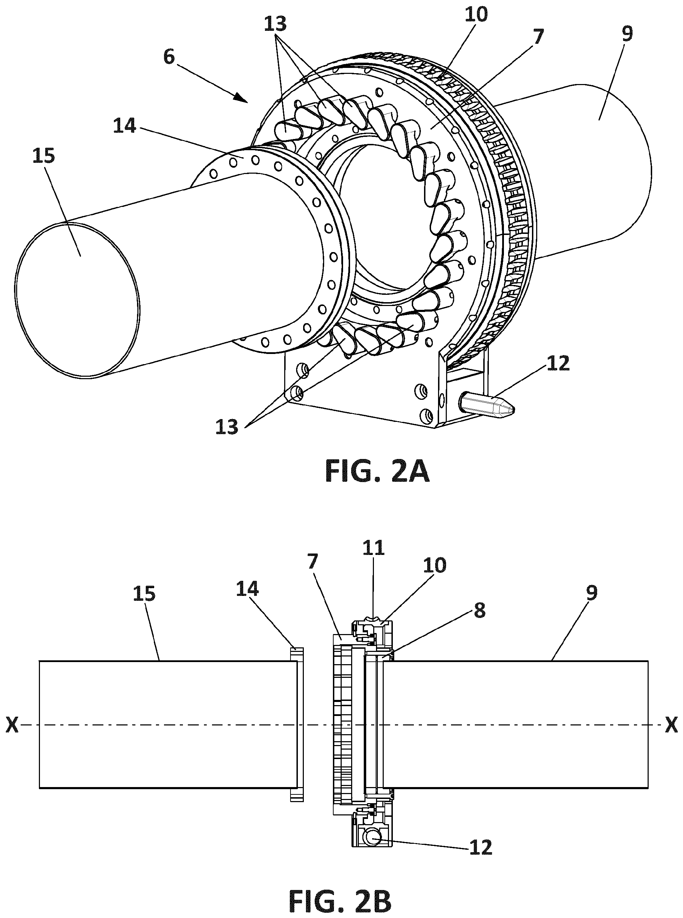

**Figures 2A** and **2B** show a preferred embodiment of a clamping system (6) according to the invention, the system comprising a main body (7) having an annular configuration and adapted to be coupled around a first flange (8) meant to be joined to a first pipe (9). The clamping system (6) further comprises a ring-shaped crown (10) mounted on the main body (7), such that the crown (10) can rotate about the main body (7).

The crown (10) has an outer toothed surface (11), and the clamping system (6) includes an endless screw (12) meshed with the outer toothed surface (11), so that the crown is rotatable by rotating the endless screw (12) with a proper tool. As shown in **Figure 2A****,** the endless screw (12) is installed in part of the main body (7).

Also as shown in **Figure 2A****,** the clamping system (6) comprises a plurality of clamps (13) installed in the main body (7) and circumferentially distributed all around the main body (7). Each clamp (13) is rotatable about an axis (Y) parallel to the axis (X) of the crown (10), and wherein each clamp (13) has a protrusion (13a) at one of its ends, wherein the protrusion (13a) extends radially with respect to the axis of the clamp.

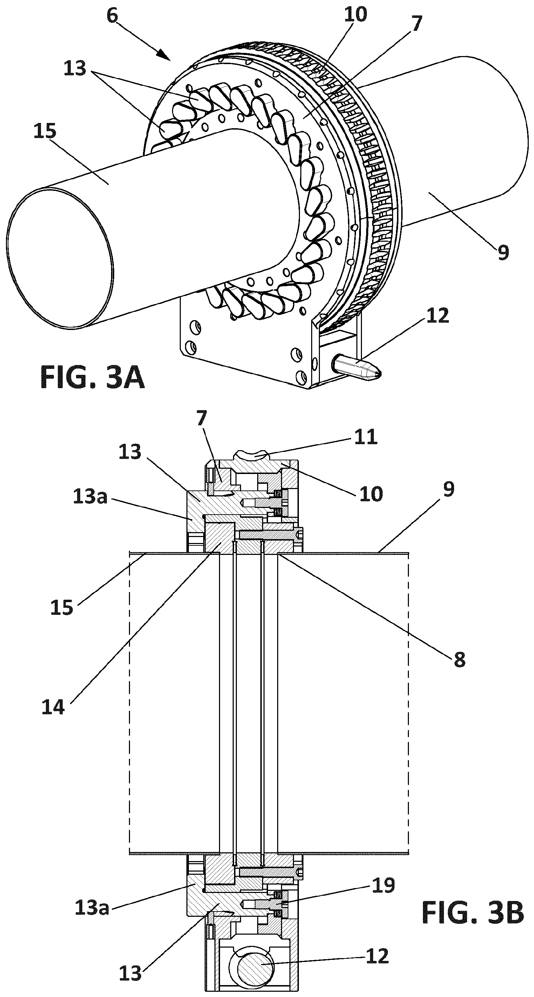

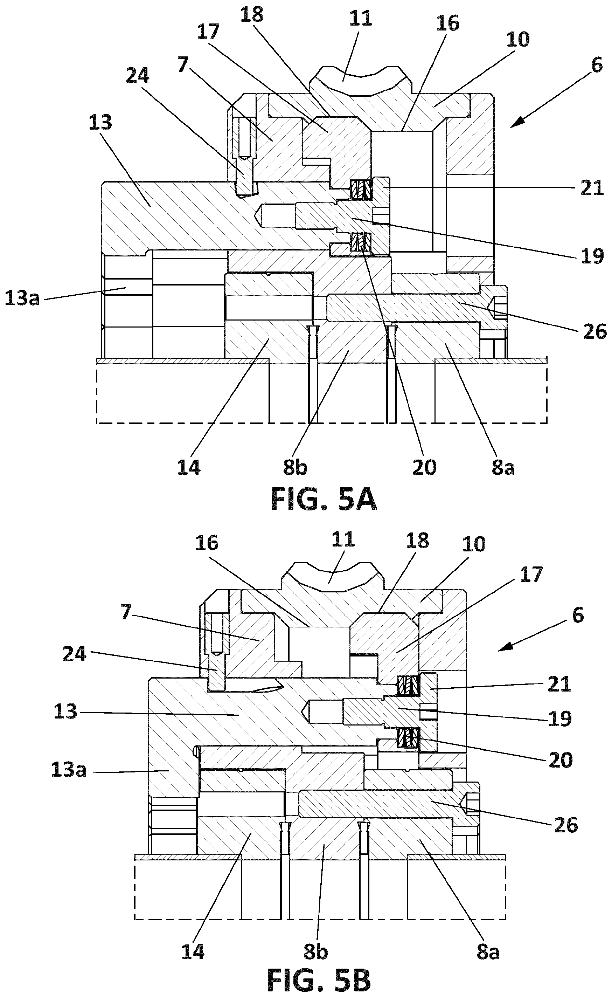

The crown (10) is mechanically engaged with all the clamps (13), such that the clamps (13) can rotate upon rotation of the crown (10). More specifically, the clamps (13) are rotatable between a release position **(****Figures 2A, 2B****,** **5A****)** in which a second flange (14) meant to be joined to a second pipe (15), can be received in between the clamps (13), and a clamping position **(****Figures 3A, 3B****,** **4****,** and **5B****)** in which the protrusions (13a) project inwardly with respect to the main body (7), so as to press on the second flange (14) against the first flange (8) in order to be able to clamp two flanges (8, 15) together.

As better shown in **Figures 5A, 5B****,** the crown (10) has an internal threaded surface (16), and the system (6) includes a ring (17) having an outer threaded surface (18) meshed with the internal threaded surface (16). Additionally, the main body (7) and the ring (17) are configured such that the rotation of the ring is impeded, but the ring (17) is axially displaceable upon rotation of the crown (10).

Each clamp (13) has a screw (19) threaded in the end of the clamp opposite the end having the protrusion (13a), and a coiled spring (20) interposed in between the clamp (13) and the head (21) of the screw (19). A part of the ring (17) is interposed in between the coiled spring (20) and the clamp (13). In this way, the ring (17) is engaged with all the clamps (13), so that all the clamps (13) and the ring (17) are displaceable together in both axial directions.

Additionally, the axial position of each clamp (13) in the clamping position, is adjustable. For this, the coiled springs (20) ensure firm contact with a specific force on the second flange (14), in order to compensate for any deviation in flatness that may exist between the gasket, the flange and the device itself. The coiled springs (20) allow the pressure exerted by each clamp (13) to be adjusted uniformly, ensuring optimum sealing even in conditions where there are irregularities in the contact surfaces. This ensures the integrity of the assembly and minimizes the possibility of leakage or sealing failure, due to variations in the flatness of the surfaces.

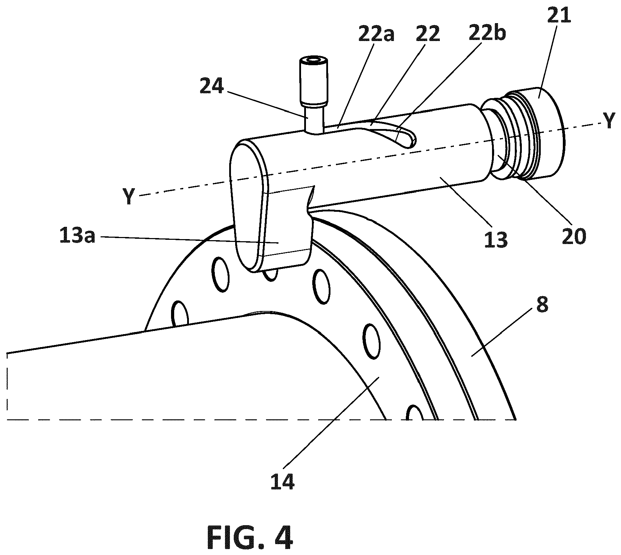

The configuration of each clamp (13) is represented with more detail in **Figure 4****.** Each clamp (13) has a cylindrical main body (25) having two ends, so in one end the protrusion (13a) is formed extending radially with respect to the axis (X), and in the opposite end the screw (21) is threaded retaining the coiled spring (20).

Additionally, each clamp (13) has a groove (22) and the clamping system (6) has a pin (24) for each clamp, each pin (24) being fixed to the main body (7) and inserted in a groove (22) of a clamp (13). Each groove (22) has a straight section (22a) extending axially and an inclined section (22b) with respect to the straight section (22a).

In the release position, in each clamp (13), the pin (24) is placed at the right-hand side end of the groove (22) as shown in **Figure 5A****,** and the protrusion (13a) is tangentially oriented as shown in **Figure 2A****,** so as to allow a second flange (14) to be received in between the clamps (13) and contacting with the first flange (8). When the crown (10) is rotated, the ring (17) moves axially towards the right-hand side of **Figures 5A, 5B****,** so that each clamp (13) rotates about its axis (Y), forced by the passage of the pin (24) through the inclined section (22b) of the groove (22), and consequently the protrusion (13a) also rotates to reach a radial position, until the ring (17) reaches the position shown in **Figure 5B****,** and the pin (24) reached the left-hand side end of the groove (22). In this clamping position, the clamps (13) press the first and second flanges (8, 14) together.

In the embodiment shown in the figures, the first flange (8) is formed by a first part (8a) and a second part (8b) coaxially mounted on the end of the first pipe (9), and attached together by means of screws (26).

All the components of the clamping system (6) are manufactured in stainless steel or bronze, thus guaranteeing optimum resistance and prolonged durability in various severe environmental conditions.

In addition, to improve performance and reduce friction in critical areas, a surface treatment, such as Balinit ^{®}, is applied, providing a more slippery surface and greater efficiency in the operation of the clamping system. This improved surface treatment contributes to optimize the performance and reliability of the device, in its specific application of the invention, especially for Ultra High Vacuum (UHV) applications.

## Claims

1. Clamping system (6) for flanges, the system comprising:
a main body (7) having an annular configuration and adapted to be coupled around a first flange (8),
a ring-shaped crown (10) mounted on the main body (7), such that the crown (10) can rotate about the main body (7),
means for rotating the crown (10),
a plurality of clamps (13) installed in the main body (7) and circumferentially distributed around the main body (7), and wherein each clamp (13) is rotatable about an axis (Y) parallel to the axis (X) of the crown (10), and wherein each clamp (13) has a protrusion (13a) at one of its ends, the protrusion (13a) extending radially with respect to the axis (Y) of the clamp (13),
wherein the crown (10) is mechanically engaged with the clamps (13), such that the clamps (13) can rotate upon rotation of the crown (10),
and wherein the clamps (13) are rotatable between a release position for allowing a second flange (14) to be received in between the clamps (13), and a clamping position in which the protrusions (13a) project inwardly with respect to the main body (7), so as to press on a second flange (14) when a second flange (14) is placed in between the clamps, in a direction parallel to the axis (X) of the crown (10), in order to be able to clamp two flanges together,
**characterized in that** the crown (10) has an internal threaded surface (16), and wherein the system further comprises a ring (17) meshed with the internal threaded surface (16), and wherein the main body (7) and the ring (17) are configured such that the rotation of the ring (17) is impeded, but the ring (17) is axially displaceable upon rotation of the crown (10), and wherein the ring (17) is engaged with all the clamps (13), so that the clamps (13) are axially displaceable together with the ring (17) in both axial directions.

2. Clamping system according to claim 1, wherein the crown (10) has an outer toothed surface (11), and wherein the means for rotating the crown includes an endless screw (12) meshed with the outer toothed surface (11), so that the crown (10) is rotatable by rotating the endless screw (12).

3. Clamping system according to claim 1, wherein each clamp (13) has a groove (22) and the clamping system has a pin (24) for each clamp (13), each pin (24) fixed to the main body (7) and inserted in the groove (22) of a clamp (13), and wherein each groove (22) has a straight section (22a) extending axially and an inclined section (22b) with respect to the straight section (22a), so that each clamp (13) is forced to rotate when the clamp (13) moves axially and the pin (24) runs along the inclined section (22b) of the groove (22).

4. Clamping system according to claim 3, wherein each clamp (13) has a cylindrical configuration and the groove (22) is formed in the outer surface of the same.

5. Clamping system according to any of the preceding claims, wherein the axial position of each clamp (13) in the clamping position, is adjustable.

6. Clamping system according to claims 4, wherein each clamp (13) has a screw (19) threaded in the end of the clamp opposite the end having the protrusion (13a), and a coiled spring (20) interposed in between the clamp (13) and the head (21) of the screw (19), and wherein a part of the ring (17) is interposed in between the coiled spring (20) and the clamp (13).

7. A flanges assembly, comprising:
a first flange (8) permanently joined to an end of a first pipe (9),
a second flange (14) permanently joined to an end of a second pipe (15),
a clamping system (6) as the one defined in any of the preceding claims, wherein the main body (7) is coupled around the first flange (8), and wherein the second flange (14) is placed in between the clamps (13) and it is pressed against the first flange (8) by means of the clamps (13) when they are in their clamping position.

8. A flange assembly according to claim 7, wherein the first flange (8) is formed by a first part (8a) and a second part (8b) coaxially mounted on the end of the first pipe and attached together by means of screws (26).

9. A flanges assembly according to claims 7 or 8, suitable for Ultra High Vacuum (UHV) applications.

## Patentansprüche

1. Klemmsystem (6) für Flansche, wobei das System umfasst:
einen Hauptkörper (7), der eine ringförmige Konfiguration aufweist und angepasst ist, um um einen ersten Flansch (8) gekoppelt zu werden,
eine ringförmige Krone (10), die auf dem Hauptkörper (7) montiert ist, so dass sich die Krone (10) um den Hauptkörper (7) drehen kann,
Mittel zum Drehen der Krone (10),
eine Vielzahl von Klemmen (13), die in dem Hauptkörper (7) installiert und in Umfangsrichtung um den Hauptkörper (7) verteilt sind, und wobei jede Klemme (13) um eine Achse (Y) parallel zu der Achse (X) der Krone (10) drehbar ist, und wobei jede Klemme (13) einen Vorsprung (13a) an einem ihrer Enden aufweist, wobei sich der Vorsprung (13a) radial in Bezug auf die Achse (Y) der Klemme (13) erstreckt,
wobei die Krone (10) mechanisch mit den Klemmen (13) in Eingriff steht, so dass sich die Klemmen (13) bei Drehung der Krone (10) drehen können,
und wobei die Klemmen (13) zwischen einer Freigabeposition, um zu ermöglichen, dass ein zweiter Flansch (14) zwischen den Klemmen (13) aufgenommen wird, und einer Klemmposition, in der die Vorsprünge (13a) in Bezug auf den Hauptkörper (7) nach innen vorstehen, um auf einen zweiten Flansch (14) zu drücken, wenn ein zweiter Flansch (14) zwischen den Klemmen platziert ist, in einer Richtung parallel zu der Achse (X) der Krone (10) drehbar sind, um zwei Flansche zusammenklemmen zu können,
**dadurch gekennzeichnet, dass** die Krone (10) eine Innengewindefläche (16) aufweist, und wobei das System ferner einen Ring (17) umfasst, der mit der Innengewindefläche (16) in Eingriff steht, und wobei der Hauptkörper (7) und der Ring (17) so konfiguriert sind, dass die Drehung des Rings (17) verhindert wird, aber der Ring (17) bei Drehung der Krone (10) axial verschiebbar ist, und wobei der Ring (17) mit allen Klemmen (13) in Eingriff steht, so dass die Klemmen (13) zusammen mit dem Ring (17) in beiden axialen Richtungen axial verschiebbar sind.

2. Klemmsystem nach Anspruch 1, wobei die Krone (10) eine äußere gezahnte Fläche (11) aufweist, und wobei das Mittel zum Drehen der Krone eine Endlosschraube (12) beinhaltet, die mit der äußeren gezahnten Fläche (11) in Eingriff steht, so dass die Krone (10) durch Drehen der Endlosschraube (12) drehbar ist.

3. Klemmsystem nach Anspruch 1, wobei jede Klemme (13) eine Nut (22) aufweist und das Klemmsystem einen Stift (24) für jede Klemme (13) aufweist, wobei jeder Stift (24) an dem Hauptkörper (7) befestigt und in die Nut (22) einer Klemme (13) eingesetzt ist, und wobei jede Nut (22) einen geraden Abschnitt (22a), der sich axial erstreckt, und einen geneigten Abschnitt (22b) in Bezug auf den geraden Abschnitt (22a) aufweist, so dass jede Klemme (13) gezwungen wird, sich zu drehen, wenn sich die Klemme (13) axial bewegt und der Stift (24) entlang des geneigten Abschnitts (22b) der Nut (22) läuft.

4. Klemmsystem nach Anspruch 3, wobei jede Klemme (13) eine zylindrische Konfiguration aufweist und die Nut (22) in der Außenfläche derselben ausgebildet ist.

5. Klemmsystem nach einem der vorhergehenden Ansprüche, wobei die axiale Position jeder Klemme (13) in der Klemmposition einstellbar ist.

6. Klemmsystem nach Anspruch 4, wobei jede Klemme (13) eine Schraube (19) aufweist, die in das Ende der Klemme gegenüber dem Ende mit dem Vorsprung (13a) geschraubt ist, und eine Schraubenfeder (20), die zwischen der Klemme (13) und dem Kopf (21) der Schraube (19) angeordnet ist, und wobei ein Teil des Rings (17) zwischen der Schraubenfeder (20) und der Klemme (13) angeordnet ist.

7. Flanschanordnung, umfassend:
einen ersten Flansch (8), der dauerhaft mit einem Ende eines ersten Rohrs (9) verbunden ist, einen zweiten Flansch (14), der dauerhaft mit einem Ende eines zweiten Rohrs (15) verbunden ist,
ein Klemmsystem (6) nach einem der vorhergehenden Ansprüche, wobei der Hauptkörper (7) um den ersten Flansch (8) gekoppelt ist, und wobei der zweite Flansch (14) zwischen den Klemmen (13) angeordnet ist und mittels der Klemmen (13) gegen den ersten Flansch (8) gedrückt wird, wenn sie sich in ihrer Klemmposition befinden.

8. Flanschanordnung nach Anspruch 7, wobei der erste Flansch (8) durch einen ersten Teil (8a) und einen zweiten Teil (8b), der koaxial auf dem Ende des ersten Rohrs montiert und mittels Schrauben (26) aneinander befestigt ist, gebildet ist.

9. Flanschanordnung nach Anspruch 7 oder 8, die für Ultrahochvakuum(UHV)-Anwendungen geeignet ist.

## Revendications

1. Système de serrage (6) pour brides, le système comprenant :
un corps principal (7) ayant une configuration annulaire et adapté pour être couplé autour d'une première bride (8),
une couronne de forme annulaire (10) montée sur le corps principal (7), de sorte que la couronne (10) peut tourner autour du corps principal (7),
des moyens pour faire tourner la couronne (10),
une pluralité d'organes de serrage (13) installés dans le corps principal (7) et répartis de manière circonférentielle autour du corps principal (7) et dans lequel chaque organe de serrage (13) peut tourner autour d'un axe (Y) parallèle à l'axe (X) de la couronne (10), et dans lequel chaque organe de serrage (13) a une saillie (13a) au niveau de l'une de ses extrémités, la saillie (13a) s'étendant radialement par rapport à l'axe (Y) de l'organe de serrage (13),
dans lequel la couronne (10) est mécaniquement mise en prise avec les organes de serrage (13), de sorte que les organes de serrage (13) peuvent tourner suite à la rotation de la couronne (10),
et dans lequel les organes de serrage (13) peuvent tourner entre une position de libération pour permettre de recevoir une seconde bride (14) entre les organes de serrage (13) et une position de serrage dans laquelle les saillies (13a) font saillie vers l'intérieur par rapport au corps principal (7), afin d'appuyer sur une seconde bride (14), lorsqu'une seconde bride (14) est placée entre les organes de serrage, dans une direction parallèle à l'axe (X) de la couronne (10), afin de permettre de serrer deux brides ensemble,
**caractérisé en ce que** la couronne (10) a une surface interne filetée (16) et dans lequel le système comprend en outre une bague (17) engrenée avec la surface interne filetée (16), et dans lequel le corps principal (7) et la bague (17) sont configurés de sorte que la rotation de la bague (17) est empêchée, mais la bague (17) est axialement déplaçable suite à la rotation de la couronne (10), et dans lequel la bague (17) est mise en prise avec tous les organes de serrage (13), de sorte que les organes de serrage (13) sont axialement déplaçables conjointement avec la bague (17) dans les deux directions axiales.

2. Système de serrage selon la revendication 1, dans lequel la couronne (10) a une surface externe dentée (11) et dans lequel les moyens pour faire tourner la couronne comprennent une vis sans fin (12) engrenée avec la surface externe dentée (11), de sorte que la couronne (10) peut tourner en faisant tourner la vis sans fin (12).

3. Système de serrage selon la revendication 1, dans lequel chaque organe de serrage (13) comporte une rainure (22) et le système de serrage a une broche (24) pour chaque organe de serrage (13), chaque broche (24) est fixée au corps principal (7) et insérée dans la rainure (22) d'un organe de serrage (13), et dans lequel chaque rainure (22) a une section droite (22a) s'étendant axialement et une section inclinée (22b) par rapport à la section droite (22a), de sorte que chaque organe de serrage (13) est obligé de tourner lorsque l'organe de serrage (13) se déplace axialement et que la broche (24) s'étend le long de la section inclinée (22b) de la rainure (22).

4. Système de serrage selon la revendication 3, dans lequel chaque organe de serrage (13) a une configuration cylindrique et la rainure (22) est formée dans la surface externe de cette dernière.

5. Système de serrage selon l'une quelconque des revendications précédentes, dans lequel la position axiale de chaque organe de serrage (13) dans la position de serrage, est réglable.

6. Système de serrage selon la revendication 4, dans lequel chaque organe de serrage (13) a une vis (19) vissée dans l'extrémité de l'organe de serrage opposée à l'extrémité comportant la saillie (13a), et un ressort hélicoïdal (20) intercalé entre l'organe de serrage (13) et la tête (21) de la vis (19), et dans lequel une partie de la bague (17) est intercalée entre le ressort hélicoïdal (20) et l'organe de serrage (13).

7. Ensemble de brides comprenant :
une première bride (8) assemblée, de manière permanente, à une extrémité d'un premier tuyau (9),
une seconde bride (14) assemblée, de manière permanente, à une extrémité d'un second tuyau (15),
un système de serrage (6) selon l'une quelconque des revendications précédentes, dans lequel le corps principal (7) est couplé autour de la première bride (8), et dans lequel la seconde bride (14) est placée entre les organes de serrage (13) et elle est comprimée contre la première bride (8) au moyen des organes de serrage (13) lorsqu'ils sont dans leur position de serrage.

8. Ensemble de brides selon la revendication 7, dans lequel la première bride (8) est formée par une première partie (8a) et une seconde partie (8b) montées de manière coaxiale sur l'extrémité du premier tuyau et fixées ensemble au moyen de vis (26).

9. Ensemble de brides selon les revendications 7 ou 8, approprié pour des applications sous ultravide (DRV).
